# EUROPEAN PATENT APPLICATION

(11) **EP 1 883 139 A1**
(43) Date of publication of application: **30.01.2008**
(21) Application number: 07014409.2
(22) Date of filing: 23.07.2007
(51) Int. Cl.: H01S 3/102, H01S 3/131, B23K 26/06

(54) **Laser apparatus having ability to automically correct laser beam power**

(30) Priority: 25.07.2006 JP 2006201978
(71) Applicant: Fanuc Ltd, Minamitsuru-gun, Yamanashi 401-0597 (JP)
(72) Inventor: Egawa, Akira, Gotenba-shi Shizuoka 412-0043 (JP); Murakami, Takafumi, Oshino-mura Minamitsuru-gun Yamanashi 401-0511 (JP); Nishio, Akihiko, Oshino-mura Minamitsuru-gun Yamanashi 401-0511 (JP)
(74) Representative: Schmidt, Steffen

(57) **Abstract**

A laser apparatus including a laser oscillating section (12), electric power source (14), a laser-power measuring section (16) and a power-source controlling section (18). The power-source controlling section (18) includes a power-supply instructing section (20) instructing the power source to perform an electric-power supplying operation for the laser oscillating section in response to a laser-oscillation command value; and a function calculating section (22) determining, based on different laser-oscillation command values given to the power-supply instructing section and different laser-power measured values obtained by the laser-power measuring section, a function approximatively representing a correlation of the laser-power measured values relative to the laser-oscillation command values. The power-supply instructing section executes, after the function is determined, a correcting process for a laser-oscillation command value based on the function, and instructs the electric power source to perform the electric-power supplying operation in response to the corrected laser-oscillation command value.

## Description

### BACKGROUND OF THE INVENTION

### 1. Field of the Invention

The present invention relates generally to a laser oscillation technique, and more particularly to a laser apparatus having the ability to automatically correct output power of a laser beam.

### 2. Description of the Related Art

A laser apparatus adapted to be used in the field of processing, medical care, measurement and so on, is known, which includes a laser oscillating section, a laser-power measuring section for measuring output power of a laser beam generated by the laser oscillating section, and an oscillation controlling section for controlling operation of the laser oscillating section based on a laser-oscillation command value (typically, a laser-power command value) input by an operator and a laser-power measured value obtained by the laser-power measuring section. The laser oscillating section typically includes an excitation section for exciting (by electrical discharge, light, heat, chemical reaction, etc.) a laser medium, such as a flowable gas, a crystalline substrate, etc., and a light resonance section (including an emitting mirror (or a partial transmission mirror) and a rear mirror, which are disposed opposite of each other) for amplifying light energy of the laser medium excited by the excitation section and emitting the amplified light energy as a laser beam.

The laser-power measuring section includes a light detector such as a photo diode, a thermopile, etc., which is disposed close to the rear mirror of the light resonance section at a location outside the laser oscillating section. The rear mirror of the light resonance section is formed from a partial transmission mirror having slight transmissivity, so that a part of the laser beam transmitted through the rear mirror can be detected by the light detector. The output power of a part of light transmitted through the rear mirror is proportional to the output power of the laser beam emitted through the emitting mirror, and therefore, the effective power of the laser beam can be measured by the laser-power measuring section.

In the laser apparatus configured as described above, a deviation or error of the actual power of the laser beam relative to the laser-oscillation command value (or the laser-power command value) may increase due to a change in environment (temperature, humidity, etc.), positional misalignment or contamination of components (mirrors, etc.) over time, and so on. In this case, the oscillation controlling section may perform a feedback control so as to decrease power deviation, on the basis of the laser-power measured value obtained by the laser-power measuring section. However, in order to achieve fast response to the feedback control, it is required to improve the measurement accuracy of the laser-power measuring section as much as possible.

On the other hand, for example, in the laser apparatus disclosed in Japanese Patent No. 2804027 (JP-2804027-B2), when laser oscillation starts, a numerical control unit (or a power-source controlling section) calculates the ratio between a desired power command value and a corresponding measured value, and automatically corrects a power command value in an actual operation by using the calculated ratio as a correction coefficient. In this connection, several correction coefficients may have been previously determined, with regard to several different predetermined ranges of command values, as ratios between certain command values and corresponding measured values in respective command- value ranges. According to this configuration, the laser oscillating section operates in accordance with a command value automatically corrected so as to cancel power deviation as a result of a change in environment, positional misalignment of components, etc., and therefore, it is possible to generate or oscillate a laser beam at a required power, without depending on the measurement accuracy of the laser-power measuring section.

It is known that a linear relationship is not always given between the power command values and power measured values of a laser beam throughout a rated power range of a laser apparatus. For example, a ratio of measured values to command values, defined in a relatively high power zone in the rated power range, may sometimes be decreased in comparison with a ratio thereof defined in a relatively low power zone. Therefore, a power correcting procedure for a laser apparatus, disclosed in JP-2804027-B2, is configured such that correction coefficients are previously determined with regard to different predetermined ranges of command values so as to improve correction reliability. In this configuration, however, each correction coefficient is determined on the basis of a certain command value in each power-command value range, so that, in the case where a nonlinear relationship is given between the command values and the measured values in the command value range, it is difficult to ensure output power accurately corresponding to a command value other than the command value used as a reference for calculating the correction coefficient.

### SUMMARY OF THE INVENTION

It is an object of the present invention to provide a laser apparatus capable of ensuring output power accurately corresponding to a command value, while eliminating power deviation that may occur due to a change in environment, positional misalignment or contamination of components over time, and so on, throughout a rated power range of the laser apparatus.

To accomplish the above object, the present invention provides a laser apparatus comprising a laser oscillating section; an electric power source supplying electric power for oscillation to the laser oscillating section; a laser-power measuring section measuring output power of a laser beam generated by the laser oscillating section; and a power-source controlling section controlling the electric power source, based on a laser-power measured value obtained by the laser-power measuring section and a laser-oscillation command value; the power-source controlling section comprising a power-supply instructing section instructing the electric power source to perform an electric-power supplying operation for the laser oscillating section in response to a laser-oscillation command value; and a function calculating section determining, based on a plurality of different laser-oscillation command values given to the power-supply instructing section and a plurality of different laser-power measured values obtained by the laser-power measuring section with regard respectively to laser beams generated by the laser oscillating section in response to the different laser-oscillation command values, a function approximatively representing a correlation of the laser-power measured values relative to the laser-oscillation command values; the power-supply instructing section executing, after the function calculating section determines the function, a correcting process for a laser-oscillation command value based on the function, and instructing the electric power source to perform the electric-power supplying operation in response to the laser-oscillation command value subjected to the correcting process.

According to the above-described laser apparatus of the present invention, it is possible to automatically correct a laser-oscillation command value for laser-processing, so as to permit the laser oscillating section to generate or oscillate a laser beam at output power accurately corresponding to the laser-oscillation command value, throughout a desired output-power range (e.g., the rated power range of the laser apparatus), while taking into consideration a correlation between laser-power measured values and laser-oscillation command values in the initial state of the laser apparatus. Therefore, even when, for example, the laser apparatus possesses nonlinear input/output characteristics such that a ratio of measured values to command values, defined in a relatively high power zone in the rated power range, is decreased in comparison with a ratio thereof defined in a relatively low power zone, it is possible to appropriately and automatically correct the given laser-oscillation command value so as to follow such nonlinear characteristics, and thereby to permit the laser oscillating section to generate or oscillate the laser beam at the output power accurately corresponding to the laser-oscillation command value. The above-described correcting process for the laser-oscillation command value may be automatically performed, for example, every time the laser apparatus is activated, or upon an operator's demand. As a result, in the laser apparatus, it is possible to ensure the output power accurately corresponding to the laser-oscillation command value, while eliminating power deviation that may occur due to a change in environment (temperature, humidity, etc.), positional misalignment or contamination of components (mirrors, etc.) over time, and so on, throughout the rated power range of the laser apparatus.

In the above laser apparatus, the function calculating section may use electric-power command values as the laser-oscillation command values and determine the function approximatively representing a correlation of the laser-power measured values relative to the electric-power command values. In this arrangement, the power-supply instructing section may use a laser-power command value as the laser-oscillation command value, and as the correcting process executed for the laser-oscillation command value, calculate an electric-power command value from the laser-power command value in accordance with an inverse function opposite to the function determined by the function calculating section. Further, the power-supply instructing section may instruct the electric-power supplying operation by providing the electric-power command value to the electric power source.

Alternatively, the function calculating section may use laser-power command values as the laser-oscillation command values and determine the function approximatively representing a correlation of the laser-power measured values relative to the laser-power command values. In this arrangement, the power-supply instructing section may use a laser-power command value as the laser-oscillation command value, and as the correcting process executed for the laser-oscillation command value, calculate an electric-power command value from the laser-power command value in accordance with a correlation opposite to the correlation represented by the function determined by the function calculating section. Further, the power-supply instructing section may instruct the electric-power supplying operation by providing the electric-power command value to the electric power source.

### BRIEF DESCRIPTION OF THE DRAWINGS

The above and other objects, features and advantages of the present invention will become more apparent from the following description of preferred embodiments in connection with the accompanying drawings, wherein:
Fig. 1 is a functional block diagram showing a basic configuration of a laser apparatus according to the present invention;
Fig. 2 in an illustration diagrammatically showing a specific configuration of the laser apparatus of Fig. 1;
Figs. 3A to 3D are illustrations explaining an ability to automatically correct a command value in a laser apparatus according to a first embodiment of the present invention;
Figs. 4A to 4C are illustrations explaining an ability to automatically correct a command value in a laser apparatus according to a second embodiment of the present invention; and
Fig. 5 is a functional block diagram showing a basic configuration of a modified laser apparatus.

### DETAILED DESCRIPTION

The embodiments of the present invention are described below, in detail, with reference to the accompanying drawings. In the drawings, same or similar components are denoted by common reference numerals.

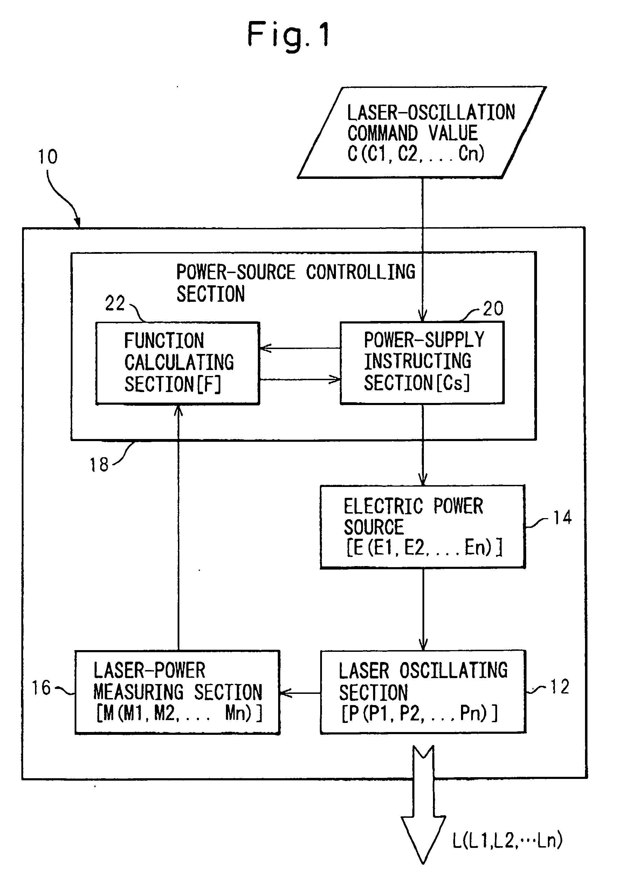

Referring to the drawings, Fig. 1 shows, by a functional block diagram, a basic configuration of a laser apparatus 10 according to the present invention. The laser apparatus 10 includes a laser oscillating section 12; an electric power source 14 for supplying electric power E for oscillation to the laser oscillating section 12; a laser-power measuring section 16 for measuring output power P of a laser beam L generated or oscillated by the laser oscillating section 12; and a power-source controlling section 18 for controlling the electric power source 14 based on a laser-power measured value M obtained by the laser-power measuring section 16 and a laser-oscillation command value C.

The power-source controlling section 18 includes a power-supply instructing section 20 for instructing the electric power source 14 to perform an electric-power supplying operation for the laser oscillating section 12 in response to a laser-oscillation command value C; and a function calculating section 22 for determining, based on a plurality of different laser-oscillation command values C (C1, C2, ... Cn) given to the power-supply instructing section 20 and a plurality of different laser-power measured values M (M1, M2, ... Mn) obtained by the laser-power measuring section 16 with regard respectively to laser beams L (L1, L2, ... Ln) generated or oscillated by the laser oscillating section 12 in response to the different laser-oscillation command values C, a function F approximatively representing a correlation of the laser-power measured values M relative to the laser-oscillation command values C. After the function calculating section 22 determines the function F, the power-supply instructing section 20 executes a correcting process for a laser-oscillation command value C based on the function F, and instructs the electric power source 14 to perform the electric-power supplying operation in response to the laser-oscillation command value C that has been subjected to the correcting process.

More specifically, the power-supply instructing section 20 of the power-source controlling section 18 can instruct the electric power source 14 to perform the electric-power supplying operation, by providing an electric-power (to be supplied) command value Cs obtained from the laser-oscillation command value C (given by, e.g., an input operation by an operator) to the electric power source 14. In this connection, in the case where the laser-oscillation command value C is prepared as a laser-power command value, the power-supply instructing section 20 calculates the electric-power command value Cs to be provided to the electric power source 14, from the laser-power command value in accordance with a predetermined rule (e.g., a linear function, when the laser apparatus is in an initial state). On the other hand, in the case where the laser-oscillation command value C is prepared as an electric-power (to be supplied) command value, the power-supply instructing section 20 optimizes this electric-power command value (or uses this value as it is, when the laser apparatus is in an initial state) so as to obtain the electric-power command value Cs to be provided to the electric power source 14.

When the laser apparatus 10 is in an initial state (i.e., in a state before a command value is first corrected), the power-supply instructing section 20 instructs the electric power source 14 to perform an electric-power supplying operation to the laser oscillating section 12, in response to a plurality of different laser-oscillation command values (i.e., laser-power command values or electric-power command values) C (C1, C2, ... Cn) prepared for a preliminary correction. Thus, the electric power source 14 supplies electric powers E (E1, E2, ... En) corresponding respectively to the laser-oscillation command values C (C1, C2, ... Cn) to the laser oscillating section 12, and the laser oscillating section 12 generates or oscillates a plurality of different laser beams L (L1, L2, ... Ln) at output powers P (P1, P2, ... Pn) corresponding respectively to the electric powers E (E1, E2, ... En). Then, the laser-power measuring section 16 measures the respective output powers P (P1, P2, ... Pn) of the laser beams L (L1, L2, ... Ln), so as to obtain the plurality of different laser-power measured values M (M1, M2, ... Mn).

Based on the plurality of different laser-oscillation command values C (C1, C2, ... Cn) and the plurality of different laser-power measured values M (M1, M2, ... Mn) corresponding respectively to the laser-oscillation command values C, the function calculating section 22 determines, by interpolation, a function F approximatively representing a correlation between the laser-power measured values M and the laser-oscillation command values C in a desired output-power range (e.g., in the rated power range of the laser apparatus 10). The function F thus obtained may include both linear and nonlinear regions.

After the function calculating section 22 determines the function F, and when laser processing such as machining, medical care, measurement and so on, are performed, the power-supply instructing section 20 executes an appropriate correcting process for the laser-oscillation command value C prepared for the laser processing (given by, e.g., an input operation by an operator) based on the function F. The correcting process, executed on the basis of the function F, automatically modifies or optimizes the laser-oscillation command value C so as to permit the laser oscillating section 12 to generate a laser beam L at output power P accurately corresponding to the laser-oscillation command value C throughout the desired output-power range (e.g., the rated power range of the laser apparatus 10), while taking into consideration the correlation between the laser-power measured values M and the laser-oscillation command values C in the initial state.

The laser-oscillation command value C thus optimized is provided to the electric power source 14, so that the electric power source 14 supplies electric power E accurately corresponding to the laser-oscillation command value C for laser-processing (given by, e.g., an input operation by an operator) to the laser oscillating section 12. As a result, the laser oscillating section 12 generates or oscillates a laser beam L at output power P accurately corresponding to the laser-oscillation command value C for laser-processing, throughout a desired output-power range (e.g., the rated power range of the laser apparatus 10).

As described above, in the laser apparatus 10, it is possible to automatically correct a laser-oscillation command value C for laser-processing, so as to permit the laser oscillating section 12 to generate or oscillate a laser beam L at output power P accurately corresponding to the laser-oscillation command value C, throughout a desired output-power range (e.g., the rated power range of the laser apparatus 10), while taking into consideration a correlation between laser-power measured values M and laser-oscillation command values C in the initial state of the laser apparatus 10. Therefore, even when, for example, the laser apparatus 10 possesses nonlinear input/output characteristics such that a ratio of an increment of the measured values to an increment of the command values, defined in a relatively high power zone in the rated power range, is decreased in comparison with a ratio thereof defined in a relatively low power zone, it is possible to appropriately and automatically correct the given laser-oscillation command value C so as to follow such nonlinear characteristics, and thereby permit the laser oscillating section 12 to generate or oscillate the laser beam L at the output power P accurately corresponding to the laser-oscillation command value C.

The above-described correcting process for the laser-oscillation command value C may be automatically performed, for example, every time the laser apparatus 10 is activated, or upon an operator's demand. As a result, in the laser apparatus 10, it is possible to ensure output power P accurately corresponding to the laser-oscillation command value C, while eliminating power deviation that may occur due to a change in environment (temperature, humidity, etc.), positional misalignment or contamination of components (mirrors, etc.) over time, and so on, throughout the rated power range of the laser apparatus 10.

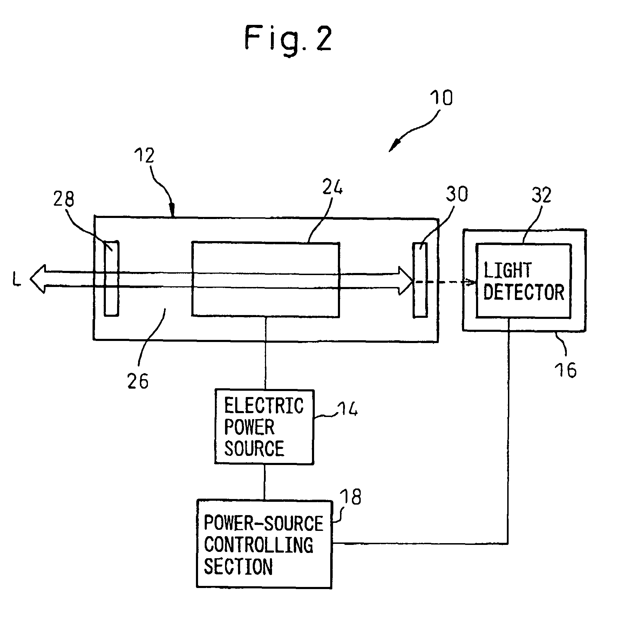

Fig. 2 diagrammatically illustrates a specific configuration of the laser apparatus 10 described above. The laser oscillating section 12 of the laser apparatus 10 includes an excitation section 24 for exciting (by electrical discharge, light, heat, chemical reaction, etc.) a laser medium such as flowable gas, a crystalline substrate, etc., and a light resonance section 26 for amplifying light energy of the laser medium excited by the excitation section 24 and emitting the amplified light as a laser beam L. The electric power source 14 is connected to the excitation section 24 and supplies desired electric power to the excitation section 24 under the control of the power-source controlling section 18.

The light resonance section 26 includes an emitting mirror (or a partial transmission mirror) 28 and a rear mirror (or a partial transmission mirror) 30, which are disposed opposite to each other at opposite sides of the light resonance section 26. The laser-power measuring section 16 includes a light detector 32 such as a photo diode, a thermopile, etc., and the light detector 32 is disposed close to the rear mirror 30 of the light resonance section 26 at a location outside the laser oscillating section 12. The rear mirror 30 is formed from a partial transmission mirror having slight transmissivity, so that a part of the laser beam L transmitted through the rear mirror 30 can be detected by the light detector 32. The output power of a part of light transmitted through the rear mirror 30 is proportional to the output power of the laser beam L emitted through the emitting mirror 28, and therefore, the effective power of the laser beam L can be measured by the laser-power measuring section 16.

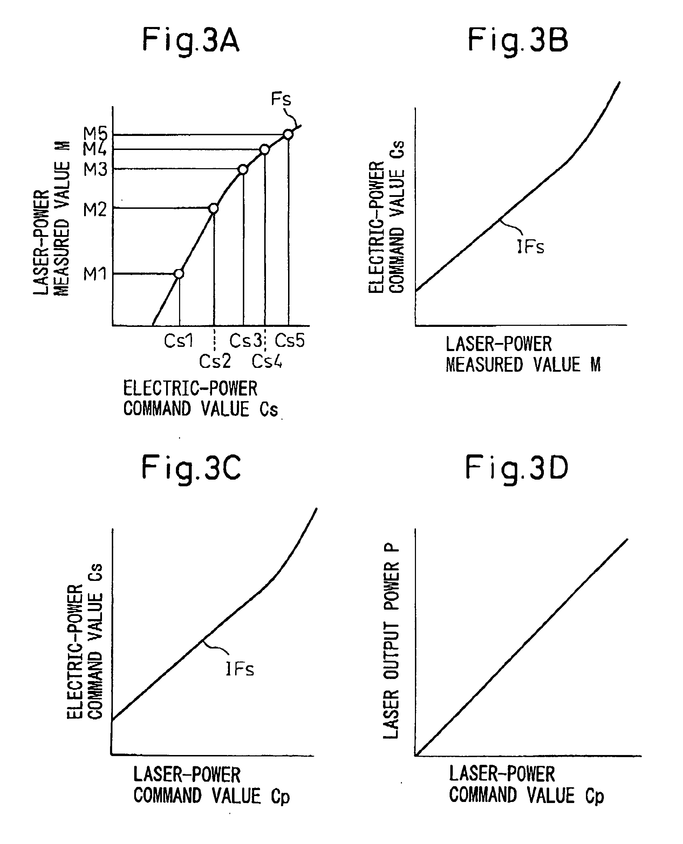

The characteristic effects of the laser apparatus 10, according to several preferred embodiments of the present invention, will be described below with reference to Figs. 3A to 4C. The configurations in the following embodiments are substantially identical to the basic configuration shown in Figs. 1 and 2 described above. Therefore, corresponding components are denoted by like reference numerals, and the descriptions thereof are not repeated.

Figs. 3A to 3D explain an ability to automatically correct a command value in the laser apparatus 10 according to a first embodiment of the present invention. In this embodiment, the power-supply instructing section 20 uses a laser-power command value Cp as a laser-oscillation command value C, and calculates an electric-power (to be supplied) command value Cs to be provided to the electric power source 14, from the laser-power command value Cp in accordance with a predetermined rule (e.g., a linear function, when the laser apparatus is in an initial state). Further, in this embodiment, with a predetermined electric-power command value Cs being specified as a threshold, it is assumed that a laser output power P is empirically predicted to be generated in accordance with a linear function with respect to the electric-power command value Cs in a region lower than the threshold, and to be generated in accordance with a quadratic function with respect to the electric-power command value Cs in a region equal to or higher than the threshold.

First, the function calculating section 22 of the power-source controlling section 18 uses electric-power command values Cs, obtained from laser-power command values Cp by the power-supply instructing section 20, as laser-oscillation command values C, and determines, based on a plurality of different electric-power command values Cs (Csl, Cs2, ... Csn) prepared for a preliminary correction and a plurality of different laser-power measured values M (M1, M2, ... Mn) corresponding respectively to the electric-power command values Cs, a function Fs approximatively representing a correlation of the laser-power measured values M relative to the electric-power command values Cs (Fig. 3A). As a result of an interpolation of data according to the above-described prediction, the function Fs as illustrated is obtained as a linear function in a region lower than a threshold Cs2 of the electric-power command value Cs and obtained as a quadratic function in a region equal to or higher than the threshold Cs2.

Next, as the above-described correcting process executed for the laser-oscillation command value C, the power-supply instructing section 20 uses an inverse function IFs (Fig. 3B) opposite to the function Fs determined by the function calculating section 22 as a rule for calculating an electric-power command value Cs from a laser-power command value Cp for laser-processing (Fig. 3C). Under this rule (i.e., the inverse function IFs), the electric-power command value Cs calculated from the laser-power command value Cp for laser-processing by the power-supply instructing section 20 acts to cancel the quadratic-function (or non-linear) region in the correlation of the laser-power measured values M relative to the electric-power command values Cs before executing the correcting process. In other words, in a region in which the laser-power measured value M is lower than an ideal laser-power measured value linearly corresponding to the electric-power command value Cs before executing the correcting process, a new calculation rule is applied, which is optimized so as to increase the electric-power command value Cs obtained from the laser-power command value Cp for laser-processing and thus to increase the output power P to eliminate a shortfall in the laser-power measured value M (Fig. 3C).

The power-supply instructing section 20 provides the electric-power command value Cs, obtained from the laser-power command value Cp for laser-processing in accordance with the above-described calculation rule (i.e., the inverse function IFs), to the electric power source 14, so as to instruct the electric power source 14 to supply electric power E to the laser oscillating section 12. As a result, the laser oscillating section 12 generates or oscillates the laser beam L at the output power P accurately corresponding to the laser-power command value Cp for laser-processing, throughout the desired output-power range (e.g., the rated power range of the laser apparatus 10) (Fig. 3D). The above-described calculation rule (i.e., the inverse function IFs) is used by the power-supply instructing section 20 for obtaining the electric-power command value Cs from the laser-power command value Cp, until a subsequent process for automatically correcting a command value is performed.

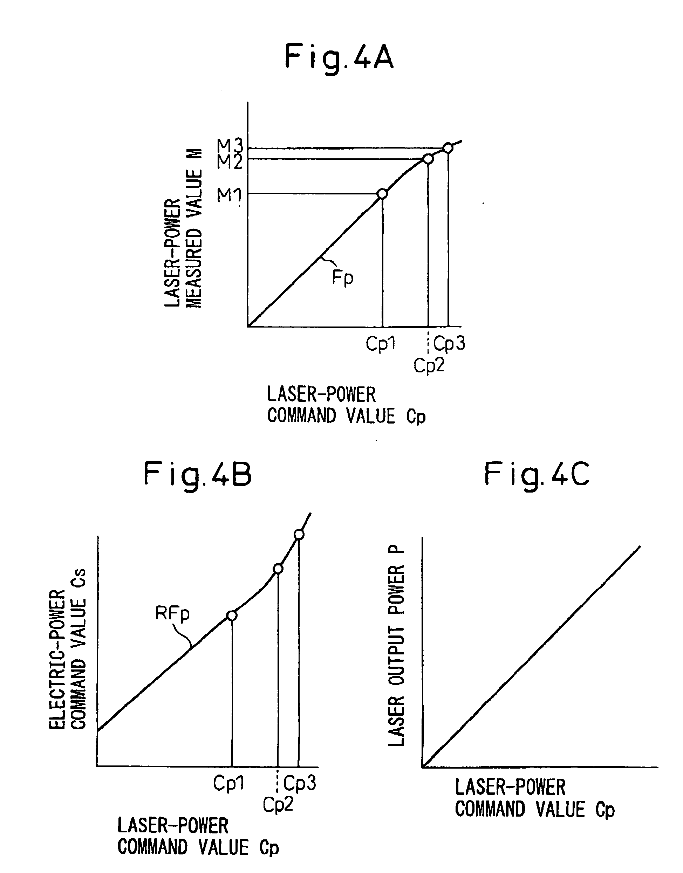

Figs. 4A to 4C explain an ability to automatically correct a command value in the laser apparatus 10 according to a second embodiment of the present invention. In this embodiment, similar to the embodiment of Figs. 3A to 3D, the power-supply instructing section 20 uses a laser-power command value Cp as the laser-oscillation command value C, and calculates an electric-power (to be supplied) command value Cs to be provided to the electric power source 14, from the laser-power command value Cp in accordance with a predetermined rule (e.g., a linear function, when the laser apparatus is in an initial state). Further, in this embodiment, with a predetermined electric-power command value Cs being specified as a threshold, it is assumed that a laser output power P is empirically predicted to be generated in accordance with a linear function with respect to the laser-power command value Cp in a region lower than the threshold, and to be generated in accordance with a quadratic function with respect to the laser-power command value Cp in a region equal to or higher than the threshold.

First, the function calculating section 22 of the power-source controlling section 18 uses laser-power command values Cp, given to the power-supply instructing section 20, as laser-oscillation command values C, and determines, based on a plurality of different laser-power command values Cp (Cp1, Cp2, ... Cpn) prepared for a preliminary correction and a plurality of different laser-power measured values M (M1, M2, ... Mn) corresponding respectively to the laser-power command values Cp, a function Fp approximatively representing a correlation of the laser-power measured values M relative to the laser-power command values Cp (Fig. 4A). As a result of an interpolation of data according to the above-described prediction, the function Fp as illustrated is obtained as a linear function in a region lower than a threshold Cp1 of the laser-power command value Cp and obtained as a quadratic function in a region equal to or higher than the threshold Cp1.

Next, as the above-described correcting process executed for the laser-oscillation command value C, the power-supply instructing section 20 uses a function RFp representing a correlation opposite to the correlation represented by the function Fp determined by the function calculating section 22 as a rule for calculating an electric-power command value Cs from a laser-power command value Cp for laser-processing (Fig. 4B). Under this rule (i.e., the function RFp), the electric-power command value Cs calculated from the laser-power command value Cp for laser-processing by the power-supply instructing section 20 acts to cancel the quadratic-function (or non-linear) region in the correlation of the laser-power measured values M relative to the laser-power command values Cp before executing the correcting process. In other words, in a region in which the laser-power measured value M is lower than the laser-power command value Cp before executing the correcting process, a new calculation rule is applied, which is optimized so as to increase the electric-power command value Cs obtained from the laser-power command value Cp for laser-processing and thus to increase the output power P to eliminate a shortfall in the laser-power measured value M (Fig. 4B).

The power-supply instructing section 20 provides the electric-power command value Cs, obtained from the laser-power command value Cp for laser-processing in accordance with the above-described calculation rule (i.e., the function RFp), to the electric power source 14, so as to instruct the electric power source 14 to supply the electric power E to the laser oscillating section 12. As a result, the laser oscillating section 12 generates or oscillates the laser beam L at the output power P accurately corresponding to the laser-power command value Cp for laser-processing, throughout the desired output-power range (e.g., the rated power range of the laser apparatus 10) (Fig. 4C). The above-described calculation rule (i.e., the function RFp) is used by the power-supply instructing section 20 for obtaining the electric-power command value Cs from the laser-power command value Cp, until a subsequent process for automatically correcting a command value is performed.

Although not shown, even if an electric-power command value Cs as a direct command to the electric power source 14 is used as the laser-oscillation command value C given to the power-supply instructing section 20, the laser apparatus 10 according to the present invention can also exhibit an effective ability to automatically correct a command value. In this case, the function calculating section 22 uses the electric-power command value Cs, given to the power-supply instructing section 20, as the laser-oscillation command value C, and determines, based on a plurality of different electric-power command value Cs (Csl, Cs2, ... Csn) prepared for a preliminary correction and a plurality of different laser-power measured values M (M1, M2, ... Mn) corresponding respectively to the electric-power command values Cs, a function Fs approximatively representing a correlation of the laser-power measured values M relative to the electric-power command values Cs (Fig. 3A).

As the above-described correcting process executed for the laser-oscillation command value C, the power-supply instructing section 20 corrects an electric-power command value Cs for laser-processing, in accordance with the function Fs determined by the function calculating section 22. As a result of this correction, the electric-power command value Cs for laser-processing, given to the electric power source 14 by the power-supply instructing section 20, acts to cancel the quadratic-function region in the correlation of the laser-power measured values M relative to the electric-power command values Cs before executing the correcting process. In other words, in a region in which the laser-power measured value M is lower than an ideal laser-power measured value linearly corresponding to the electric-power command value Cs before executing the correcting process, a correcting process is performed so as to increase the electric-power command value Cs for laser-processing and thus to increase the output power P to eliminate a shortfall in the laser-power measured value M (Fig. 3C).

The power-supply instructing section 20 provides the electric-power command value Cs, subjected to the above-described correcting process, to the electric power source 14, so as to instruct the electric power source 14 to supply the electric power E to the laser oscillating section 12. As a result, the laser oscillating section 12 generates or oscillates the laser beam L at the output power P accurately corresponding to the electric-power command value Cs for laser-processing, throughout the desired output-power range (e.g., the rated power range of the laser apparatus 10). The above-described correction rule (i.e., the function Fs) is used by the power-supply instructing section 20 for correcting the electric-power command value Cs, until a subsequent process for automatically correcting a command value is performed.

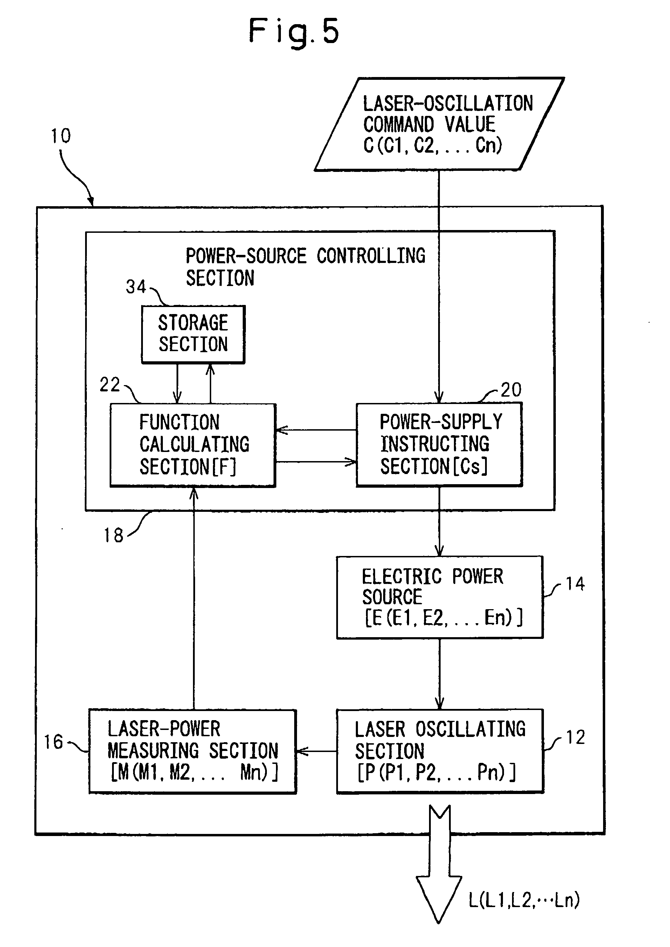

In the laser apparatus 10 according to the present invention, it is advantageous that the power-source controlling section 18 further includes a storage section 34 for storing at least one of the function F determined by the function calculating section 22 for the correcting process and a set of the plurality of different laser-oscillation command values C (C1, C2, ... Cn) prepared for a preliminary correction and the plurality of different laser-power measured values M (M1, M2, ... Mn) corresponding respectively thereto (see Fig. 5). In this configuration, it is possible to quickly and accurately perform an appropriate automatic correcting process for a command value without relying on an external storage device.

The laser apparatus 10 according to the present invention can preferably be adopted in a laser processing system (e.g., a robot system) for performing, e.g., cutting or welding. Also, the laser apparatus 10 can be applied to various laser systems (e.g., robot systems) other than the laser processing system, such as a medical system (e.g., diagnosis or treatment). In any case, the laser apparatus 10 can generate or oscillate a laser beam L at output power P accurately corresponding to a laser-oscillation command value C for laser-processing, throughout a desired output-power range (e.g., the rated power range of the laser apparatus 10), and thus can more stably perform laser processing.

While the invention has been described with reference to specific preferred embodiments, it will be understood, by those skilled in the art, that various changes and modifications may be made thereto without departing from the scope of the following claims.

## Claims

1. A laser apparatus comprising a laser oscillating section (12); an electric power source (14) supplying electric power for oscillation (E) to said laser oscillating section; a laser-power measuring section (16) measuring output power (P) of a laser beam (L) generated by said laser oscillating section; and a power-source controlling section (18) controlling said electric power source, based on a laser-power measured value (M) obtained by said laser-power measuring section and a laser-oscillation command value (C), **characterized in that** said power-source controlling section (18) comprises:
a power-supply instructing section (20) instructing said electric power source (14) to perform an electric-power supplying operation for said laser oscillating section (12) in response to a laser-oscillation command value (C); and
a function calculating section (22) determining, based on a plurality of different laser-oscillation command values (C; C1, C2, ... Cn) given to said power-supply instructing section and a plurality of different laser-power measured values (M; M1, M2, ... Mn) obtained by said laser-power measuring section (16) with regard respectively to laser beams (L; L1, L2, ... Ln) generated by said laser oscillating section (12) in response to said different laser-oscillation command values, a function (F; Fs; Fp) approximatively representing a correlation of said laser-power measured values relative to said laser-oscillation command values;
wherein said power-supply instructing section executes, after said function calculating section determines said function, a correcting process for a laser-oscillation command value based on said function, and instructs said electric power source to perform said electric-power supplying operation in response to said laser-oscillation command value subjected to said correcting process.

2. A laser apparatus as set forth in claim 1, wherein said function calculating section (22) uses electric-power command values (Cs) as said laser-oscillation command values (c) and determines said function (Fs) approximatively representing a correlation of said laser-power measured values (M) relative to said electric-power command values (Cs); wherein said power-supply instructing section (20) uses a laser-power command value (Cp) as said laser-oscillation command value and, as said correcting process executed for said laser-oscillation command value, calculates an electric-power command value (Cs) from said laser-power command value in accordance with an inverse function (IFs) opposite to said function determined by said function calculating section; and wherein said power-supply instructing section instructs said electric-power supplying operation by providing said electric-power command value to said electric power source (14).

3. A laser apparatus as set forth in claim 1, wherein said function calculating section (22) uses laser-power command values (Cp) as said laser-oscillation command values (C) and determines said function (Fp) approximatively representing a correlation of said laser-power measured values (M) relative to said laser-power command values (Cp); wherein said power-supply instructing section (20) uses a laser-power command value (Cp) as said laser-oscillation command value and, as said correcting process executed for said laser-oscillation command value, calculates an electric-power command value (Cs) from said laser-power command value in accordance with a correlation opposite to said correlation represented by said function determined by said function calculating section; and wherein said power-supply instructing section instructs said electric-power supplying operation by providing said electric-power command value to said electric power source (14).

4. A laser apparatus as set forth in any one of claims 1 to 3, wherein said power-source controlling section (18) further comprises a storage section (34) storing at least one of said function (F; Fs; Fp) and a set of said plurality of different laser-oscillation command values (C; C1, C2, ... Cn) and said plurality of different laser-power measured values (M; M1, M2, ... Mn).
